# FASCICULE DE BREVET EUROPEEN

(11) **EP 1 011 095 B1**
(45) Date de publication et mention de la délivrance du brevet: **10.10.2001**
(21) Numéro de dépôt: 98402874.6
(22) Date de dépôt: 19.11.1998
(51) Int. Cl.: G10L 15/06

(54) **Procédé de recherche par le contenu de documents textuels utilisant la reconnaissance vocale**
Verfahren zum Durchsuchen von Textdokumenten mittels Spracherkennung
Method of retrieval of text documents using speech recognition

(30) Priorité: 16.11.1998 FR 9814381
(43) Date de publication de la demande: 21.06.2000
(73) Titulaire: FRANCE TELECOM SA, 75015 Paris (FR)
(72) Inventeur: Ferrieux, Alexandre, 22700 Perros Guirec (FR); Peillon, Stéphane, 22700 Perros Guirec (FR)
(74) Mandataire: Maillet, Alain

(56) Documents cités:
- NEUBERT F ET AL: "Directory name retrieval over the telephone in the Picasso project" PROCEEDINGS 1998 IEEE 4TH WORKSHOP INTERACTIVE VOICE TECHNOLOGY FOR TELECOMMUNICATIONS APPLICATIONS. IVTTA '98 (CAT. NO.98TH8376), PROCEEDINGS OF IVTTA'98. 4TH IEEE WORKSHOP ON INTERACTIVE VOICE TECHNOLOGY FOR TELECOMMUNICATIONS APPLICATIONS, TORINO,, pages 31-36, XP002110489 1998, New York, NY, USA, IEEE, USAISBN: 0-7803-5028-6
- FISSORE L ET AL: "LEXICAL ACCESS TO LARGE VOCABULARIES FOR SPEECH RECOGNITION" IEEE TRANSACTIONS ON ACOUSTICS, SPEECH AND SIGNAL PROCESSING, vol. 37, no. 8, 1 août 1989 (1989-08-01), pages 1197-1212, XP000045947
- DIVAY M ET AL: "Algorithms for grapheme-phoneme translation for English and French: applications for database searches and speech synthesis" COMPUTATIONAL LINGUISTICS, DEC. 1997, MIT PRESS FOR ASSOC. COMPUT. LINGUISTICS, USA, vol. 23, no. 4, pages 495-523, XP002110490 ISSN: 0891-2017
- RUDOLPH T: "Discriminative codebook design for critical word recognition using evolution strategies" PROCEEDINGS OF 1996 IEEE INTERNATIONAL CONFERENCE ON EVOLUTIONARY COMPUTATION (ICEC'96) (CAT. NO.96TH8114), PROCEEDINGS OF IEEE INTERNATIONAL CONFERENCE ON EVOLUTIONARY COMPUTATION, NAGOYA, JAPAN, 20-22 MAY 1996, pages 67-70, XP002110491 1996, New York, NY, USA, IEEE, USAISBN: 0-7803-2902-3

## Description

La présente invention concerne un procédé de recherche par le contenu de documents textuels utilisant la reconnaissance vocale.

Les techniques usuelles de recherche par le contenu textuel ont été jusqu'ici étendues aux requêtes orales par le biais de vocabulaires prédéfinis. La requête vocale formulée par l'utilisateur est transcrite par reconnaissance vocale sous la forme de mots appartenant aux vocabulaires prédéfinis. Ces mots permettent de retrouver le texte demandé au moyen d'un système d'indexation textuelle classique qui en détermine la ou les occurrences.

L'avantage de cette approche est la simplicité, puisque la transcription par reconnaissance vocale y figure comme une simple source de requêtes formulées comme à l'écrit.

La nécessité de définir à l'avance un vocabulaire (et donc un ou plusieurs thèmes) sur lequel seront "projetées" toutes les requêtes possibles est néanmoins une source de rigidité pour le système.

Il s'avère que les procédés de recherche de l'état de la technique n'offrent pas un niveau de souplesse suffisant dans des contextes à "grande largeur thématique" comme celui du contenu disponible sur Internet ou via une boîte aux lettres électronique.

Le but de l'invention est de proposer un procédé de recherche par le contenu de documents textuels utilisant la reconnaissance vocale qui permette d'éliminer la contrainte sur le vocabulaire.

A cet effet, un procédé selon l'invention est caractérisé en ce qu'il consiste à transcrire ledit texte en une première suite d'unités phonétiques, à segmenter ladite requête vocale en une seconde suite d'unités phonétiques discrètes et à rechercher les occurrences de l'expression objet de ladite requête dans le texte par un processus d'alignement desdites première et seconde suites d'unités phonétiques. Ledit processus d'alignement est avantageusement réalisé par un algorithme de programmation dynamique, prenant par exemple comme paramètres les coûts d'omission, d'insertion, et de substitution de différentes unités phonétiques.

Avantageusement, les valeurs prises par lesdits paramètres sont déterminées au moyen d'un apprentissage préalable sur un corpus d'exemples effectué en cherchant à optimiser une fonction objective, telle qu'une fonction de vraisemblance ou une fonction de discrimination.

Selon une autre caractéristique de l'invention, ladite fonction objective est la fonction de vraisemblance dont l'optimisation est réalisée au moyen d'une méthode analytique comprenant un algorithme EM (Expectation Maximization) dans la boucle duquel sont utilisés des multiplicateurs de Lagrange.

Selon une autre caractéristique de l'invention, ladite fonction objective est la fonction de discrimination dont l'optimisation se fait par un algorithme génétique, la fonction d'évaluation étant le taux d'identifications correctes.

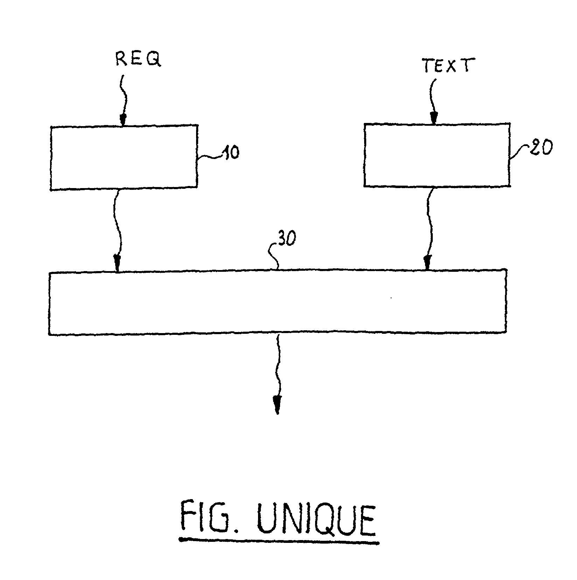

Les caractéristiques de l'invention mentionnées ci-dessus, ainsi que d'autres, apparaîtront plus clairement à la lecture de la description suivante d'un exemple de mise en oeuvre du procédé de l'invention, ladite description étant faite en relation avec le dessin joint illustrant ce procédé.

On a donc illustré à la Fig unique un procédé de recherche par le contenu selon l'invention. La requête vocale REQ faite par l'utilisateur qui est constituée d'un continuum acoustique est segmentée en une suite d'unités phonétiques discrètes par une unité de décodage acoustico-phonétique 10. Quant au texte TEXT dans lequel la recherche d'occurrence est faite, il est transcrit en une suite d'unités phonétiques de même type par une unité de transcription phonétique automatique 20. Une unité d'alignement 30 permet l'alignement des unités phonétiques issues de la requête REQ et des unités phonétiques issues du texte TEXT.

Les unités phonetiques dont il s'agit ici sont par exemple des phones, des phonèmes, des diphones, des syllabes, des états acoustiques élémentaires (fénones), des allophones, etc.

Des algorithmes de transcriptions texte-phonèmes sont discutés dans l'article de M. Divay et al., "Algorithms for grapheme-phoneme translation for English and French : applications for database searches and speech synthesis", COMPUTATIONAL LINGUISTICS, Dec 1997, MIT PRESS FOR ASSOC. COMPUT. LINGUISTICS, USA. Vol 23, nº 4, pp. 495-523.

Il résulte du fait que la recherche est faite sur des représentations phonétiques de la requête vocale et du texte cible une indépendance de ce procédé au vocabulaire utilisé.

L'unité de décodage acoustico-phonétique 10 est par exemple du type qui utilise un algorithme à modèles de Markov cachés HMM (Hidden Markov Model).

Quant à l'unité de transcription phonétique 20, elle est par exemple du type utilisé dans les systèmes de synthèse de la parole à partir de texte à base de règles.

L'alignement opéré par l'unité d'alignement 30 est fait par un algorithme de programmation dynamique, tel que l'algorithme de Viterbi, qui peut prendre comme paramètres les coûts d'omission, d'insertion ou de substitution d'une ou plusieurs unités phonétiques de la suite issue de la requête REQ. Le coût de substitution par exemple, est défini par une matrice de confusion donnant à l'intersection d'une ligne et une colonne représentant respectivement deux unités phonétiques, la valeur de ce coût pour la substitution d'une unité par l'autre.

Les valeurs prises par les différents paramètres de l'algorithme de programmation dynamique sont déterminées au moyen d'un apprentissage préalable sur un corpus d'exemples consistant à chercher à optimiser une fonction objective, telle qu'une fonction de vraisemblance ou une fonction de discrimination. L'optimisation de la fonction de vraisemblance est par exemple réalisée au moyen d'une méthode analytique comprenant un algorithme EM (Expectation Maximization) dans la boucle duquel sont utilisés des multiplicateurs de Lagrange. Quant à l'optimisation de la fonction de discrimination, elle peut se faire par un algorithme d'optimisation ne nécessitant que la seule connaissance de la fonction d'évaluation, tel qu'un algorithme génétique (forme généralisée d'un algorithme de recuit simulé). La fonction d'évaluation est alors le taux d'identifications correctes.

Cet apprentissage permet donc de coupler optimalement l'unité de décodage acoustico-phonétique 10 et l'unité de transcription phonétique automatique 20 et donc de minimiser les effets de leurs erreurs respectives.

Supposons une requête vocale sous la forme : "automne-hiver".

La transcription phonétique effectuée par l'unité 10 est par exemple la suivante :
on t au m i f ai r oe

Supposons le texte TEXT : "Pour obtenir le catalogue automne-hiver, cliquez ici"

Sa transcription par l'unité 20 est par exemple la suivante :
p u r o b t oe n i r l oe k a t a l o g au t o n i v ai r k l i k ei i s i

Quant à la détection opérée par l'unité 30, elle serait la suivante :
p u r o b t oe n i r l oe k a t a l o g au t o ni v ai r k l i k ei i s i
^ ^ ^ ^ ^ ^ ^
on t au mi f ai r oe*
où le signe ^ signifie substitution et le signe * montre une omission.

On peut constater qu'outre la liberté de choix des mots cibles, on obtient également une totale liberté de segmentation. Dans l'exemple ci-dessus, "catalogue Automne" ou "obtenir le catalogue" sont autant de clés utilisables. Si l'on cherchait à atteindre la même liberté avec les techniques traditionnelles, on serait conduit soit à une explosion combinatoire (puisqu'il faut prévoir tous les groupes de 2 mots, 3 mots, ..., n mots), soit à une syntaxe très libre et un très grand vocabulaire, qui sont deux sources d'erreurs de reconnaissance.

Par ailleurs, le coût calculatoire du procédé de la présente invention est très réduit en ce qui concerne la reconnaissance de parole, puisque quel que soit le vocabulaire effectivement utilisé comme clé de recherche, on ne reconnaît que des unités phonétiques.

Le coût calculatoire de l'alignement effectué par l'unité 30 est également raisonnable : sur un micro-ordinateur du type actuellement vendu, pour une requête vocale typique de 3 ou 4 syllabes, on peut traiter environ 100 000 phonèmes par seconde, ce qui permet d'envisager sans crainte l'accès par le contenu à une boîte aux lettres E.mail chargée, ou à une très longue page au format HTML.

Diverses applications sont envisageables. Par exemple, la sélection vocale de messages par le contenu (texte + en-têtes) dans une boîte aux lettres e-mail ou le contrôle vocal souple d'un client de navigation Internet, où les cibles ne sont pas restreintes aux liens : il suffirait alors de prononcer une expression pour activer le lien le plus proche.

## Revendications

1. Procédé consistant à rechercher dans un texte une expression objet d'une requête énoncée vocalement, **caractérisé en ce qu'**il consiste à transcrire ledit texte en une première suite d'unités phonétiques, à segmenter ladite requête vocale en une seconde suite d'unités phonétiques discrètes et à rechercher les occurrences de l'expression objet de ladite requête dans le texte par un processus d'alignement desdites première et seconde suites d'unités phonétiques.

2. Procédé selon la revendication 1, **caractérisé en ce que** ledit processus d'alignement est réalisé par un algorithme de programmation dynamique.

3. Procédé selon la revendication 2, **caractérisé en ce que** ledit algorithme de programmation dynamique prend comme paramètres les coûts d'omission, d'insertion, et de substitution de différentes unités phonétiques.

4. Procédé selon la revendication 3, **caractérisé en ce que** les valeurs prises par lesdits paramètres sont déterminées au moyen d'un apprentissage sur un corpus d'exemples effectué en cherchant à optimiser une fonction objective, telle qu'une fonction de vraisemblance ou une fonction de discrimination.

5. Procédé selon la revendication 4, **caractérisé en ce que** ladite fonction objective est la fonction de vraisemblance dont l'optimisation est réalisée au moyen d'une méthode analytique comprenant un algorithme EM (Expectation Maximization) dans la boucle duquel sont utilisés des multiplicateurs de Lagrange.

6. Procédé selon la revendication 4, **caractérisé en ce que** ladite fonction objective est la fonction de discrimination dont l'optimisation se fait par un algorithme génétique, la fonction d'évaluation étant le taux d'identifications correctes.

## Claims

1. Method consisting in searching in a text for an expression which is the objet of a request enunciated by a voice, **characterised in that** it consists in transcribing said text into a first sequence of phonetic units, in segmenting said voice request into a second sequence of discrete phonetic units and in searching for the occurrences of the expression which is the object of said request in the text by a process of alignment of said first and second sequences of phonetic units.

2. Method according to claim 1, **characterised in that** said alignment process is realised by a dynamic programming algorithm.

3. Method according to claim 2, **characterised in that** said dynamic programming algorithm takes as parameters the costs of omission, of insertion and of substitution of different phonetic units.

4. Method according to claim 3, **characterised in that** the values assumed by said parameters are determined by means of learning on a corpus of examples carried out by seeking to optimise an objective function, such as a probability function or a discrimination function.

5. Method according to claim 4, **characterised in that** said objective function is the probability function, the optimisation of which is realised by means of an analytical method comprising an EM (Expectation Maximization) algorithm in the loop of which Lagrange multipliers are used.

6. Method according to claim 4, **characterised in that** said objective function is the discrimination function, the optimisation of which is effected by a genetic algorithm, the evaluation function being the rate of correct identifications.

## Patentansprüche

1. Verfahren, das darin besteht, in einem Text einen Zielausdruck einer sprachlich dargelegten Anfrage zu suchen, **dadurch gekennzeichnet, dass** es darin besteht, den Text in eine erste Folge von phonetischen Einheiten zu übertragen, die Sprachanfrage in eine zweite Folge von diskreten phonetischen Einheiten zu segmentieren und die Vorkommen des Zielausdrucks der Anfrage im Text durch einen Ausrichtvorgang für die erste und zweite Folge von phonetischen Einheiten zu suchen.

2. Verfahren nach Anspruch 1, **dadurch gekennzeichnet, dass** der Ausrichtvorgang mit einem Algorithmus zur dynamischen Programmierung ausgeführt wird.

3. Verfahren nach Anspruch 2, **dadurch gekennzeichnet, dass** der Algorithmus zur dynamischen Programmierung die Kosten einer Auslassung, einer Einfügung und einer Ersetzung verschiedener phonetischer Einheiten als Parameter nimmt.

4. Verfahren nach Anspruch 3, **dadurch gekennzeichnet, dass** die Werte, die diese Parameter annehmen, mittels eines vorherigen Lernens an einem Korpus von Beispielen ermittelt werden, das ausgeführt wird, indem versucht wird eine Zielfunktion, wie eine Wahrscheinlichkeitsfunktion oder eine Unterscheidungsfunktion, zu optimieren.

5. Verfahren nach Anspruch 4, **dadurch gekennzeichnet, dass** die Zielfunktion die Wahrscheinlichkeitsfunktion ist, deren Optimierung mittels eines analytischen Verfahrens durchgeführt wird, das einen EM(Expectation Maximization)-Algorithmus in der Schleife umfasst, deren Lagrange-Multiplikatoren verwendet werden.

6. Verfahren nach Anspruch 4, **dadurch gekennzeichnet, dass** die Zielfunktion die Unterscheidungsfunktion, deren Optimierung mit einem genetischen Algorithmus erfolgt, wobei die Bewertungsfunktion die Rate der richtigen Identifikationen ist.
